## Europäisches Patentamt

## European Patent Office

## Office européen des brevets

(19)

(11) Veröffentlichungsnummer: **0 068 044**
**B1**

(12) **EUROPÄISCHE PATENTSCHRIFT**

(45) Veröffentlichungstag der Patentschrift:
**23.01.85**

(51) Int. Cl.⁴: **C 09 D  17/00,** C 08 L  39/06,
C 09 D  3/00

(21) Anmeldenummer: **81108071.2**

(22) Anmeldetag: **08.10.81**

(54) **Wässrige Pigmentpasten und deren Verwendung.**

(30) Priorität: **02.06.81  DE 3121765**

(43) Veröffentlichungstag der Anmeldung:
**05.01.83 Patentblatt 83/1**

(45) Bekanntmachung des Hinweises auf die Patenterteilung:
**23.01.85 Patentblatt 85/4**

(84) Benannte Vertragsstaaten:
**AT CH DE FR GB LI**

(56) Entgegenhaltungen:
**EP - A - 0 034 771**
**EP - A - 0 052 224**
**US - A - 3 492 253**

(73) Patentinhaber: **BASF Aktiengesellschaft,
Carl-Bosch-Strasse 38, D-6700 Ludwigshafen (DE)**

(72) Erfinder: **Loch, Werner, Dr., In der Bleiche 2,
D-6701 Erpolzheim (DE)**

## Beschreibung

Die Erfindung betrifft wäßrige Pigmentpasten und deren Verwendung zur Pigmentierung wäßrig gelöster bzw. dispergierter Lackbindemittel sowie zur Herstellung pigmentierter hochglänzender Wasserlacke für verschiedene Anwendungsbereiche.

In der deutschen Patentanmeldung P 3 043 601.2 werden Pigmentpasten und deren Verwendung zur Pigmentierung organisch gelöster Lackbindemittel sowie zur Herstellung pigmentierter Hochglanzlacke für verschiedene Anwendungsbereiche beansprucht. Diese Pasten können auch mit wäßrigen Lackbindemitteln auf-gelackt werden. Die resultierenden Lacke sind jedoch kaum als Wasserlacke zu bezeichnen, da sie, bedingt durch den zum Teil recht hohen Lösungsmittelgehalt der Pasten, noch beträchtliche Mengen organischer Lösungsmittel enthalten.

Für den speziellen Einsatz auf dem Wasserlackgebiet sind daher Pigmentpasten mit deutlich reduziertem Lösungsmittelanteil erwünscht. Aufgabe der vorliegenden Erfindung ist es, diesen Anforderungen entsprechende Pigmentpasten aufzuzeigen, die umweltfreundlicher sind.

Gegenstand der vorliegenden Erfindung ist eine Pigmentpaste, die dadurch gekennzeichnet ist, daß sie im wesentlichen besteht aus

A.  1 1 bis 80 Gew.-% Wasser,
B.  5 bis 84 Gew.-% mindestens eines in der Lacktechnologie üblichen organischen Lösungsmittels, ausgenommen rein aliphatische Kohlenwasserstoffe,
C.  0,1 bis 20 Gew.-% eines Copolymeren aus
  (a)  10 bis 75 Gew.-% mindestens einer nicht oder nur teilweise mit Wasser mischbaren copolymerisierbaren $\alpha,\beta$-olefinisch ungesättigten Verbindung und
  (b)  25 bis 90 Gew.-% mindestens einer wasserlöslichen copolymerisierbaren N-Vinylverbindung und
D.  10 bis 79 Gew.-% mindestens eines in dem Gemisch aus (A), (B) und (C) dispergierten feinteiligen Pigments und/oder Füllstoffes,

mit der Maßgabe, daß die Summe der unter (A), (B), (C) und (D) genannten Prozentzahlen gleich 100 ist.

Bevorzugt ist es, als nicht oder nur teilweise mit Wasser mischbare copolymerisierbare $\alpha,\beta$-olefinisch ungesättigte Verbindung (a) einen Vinylester einer $C_2$- bis $C_{18}$-Monocarbonsäure und/oder einen (Meth)acrylsäureester eines $C_4$- bis $C_{18}$-Monoalkohols sowie als wasserlösliche copolymerisierbare N-Vinylverbindung (b) N-Vinylpyrrolidon zu verwenden.

Gegenstand der vorliegenden Erfindung ist außerdem die Verwendung der erfindungsgemäßen Pigmentpasten zur Pigmentierung wäßrig gelöster bzw. dispergierter Lackbindemittel bzw. Bindemittelmischungen sowie als Abtönpasten für bereits pigmentierte hochglänzende Wasserlacke.

Überraschend war, daß die zur Herstellung der erfindungsgemäßen Pigmentpasten erforderliche Anmahlung der Pigmente in der Pastenbindemittellösung auch bei Anwesenheit größerer Mengen Wasser ohne Flockulation möglich ist. Es war ebenfalls nicht vorherzusehen, daß die erfindungsgemäßen Pigmentpasten trotz ihres niedrigen Bindemittel- und zum Teil hohen Wassergehalts über lange Zeit ohne Glanzverlust stabil sind.

Zu den einzelnen Komponenten der erfindungsgemäßen Pigmentpasten ist folgendes auszuführen:

(A)  Die Komponente (A) ist Wasser, das in den erfindungsgemäßen Pigmentpasten in Mengen von 1 bis 80, vorzugsweise 15 bis 60 Gew.-% enthalten ist.
(B)  Die Komponente (B) ist ein in der Lacktechnologie übliches organisches Lösungsmittel oder Lösungsmittelgemisch (ausgenommen rein aliphatische Kohlenwasserstoffe), das in einer Konzentration von 5 bis 84, vorzugsweise 15 bis 50 Gew.-% in den erfindungsgemäßen Pigmentpasten enthalten ist. Als derartige organische Lösungsmittel eignen sich vorzugsweise:
    $C_2$- bis $C_4$-Monoalkylether eines Mono- oder Oligoalkylenglykols, wie z. B. Ethylglykol, Butylglykol, Butyldiglykol, 1-Methoxypropanol-(2) und/oder deren Acetate, wie z. B. Ethylglykolacetat, sowie andere in der Lacktechnologie übliche organische Lösungsmittel oder -gemische, ausgenommen rein aliphatische Kohlenwasserstoffe.
(C)  Die Komponente (C) ist ein Copolymeres, das beispielsweise durch Lösungspolymerisation herstellbar ist, in einer Menge von 0,1 bis 20 Gew.-%, vorzugsweise 3 bis 8 Gew.-%, in den erfindungsgemäßen Pigmentpasten enthalten ist, und
    (a)  10 bis 75 Gew.-%, vorzugsweise 20 bis 40 Gew.-%, mindestens einer nicht oder nur teilweise mit Wasser mischbaren copolymerisierbaren $\alpha,\beta$-ethylenisch ungesättigten Verbindung und
    (b)  25 bis 90 Gew.-%, vorzugsweise 60 bis 80 Gew.-%, mindestens einer wasserlöslichen copolymerisierbaren N-Vinylverbindung
    einpolymerisiert enthält. Die Summe der unter (a) und (b) genannten Prozentzahlen ist gleich 100.
    Als nicht oder nur teilweise mit Wasser mischbare copolymerisierbare $\alpha,\beta$-ethylenisch ungesättigte Verbindungen (a) eignen sich vorzugsweise Vinylester einer $C_2$- bis $C_{18}$-Monocarbonsäure, wie z. B. Vinylacetat, Vinylpropionat, Vinylpivalat, Vinyl-2-ethylhexanat, Vinylstearat und/oder Acrylsäure- oder Methacrylsäureester von $C_4$- bis $C_{18}$-

Alkoholen, wie z. B. Butyl(meth)acrylat, 2-Ethylhexylacrylat, Laurylacrylat, Octadecylacrelat. Besonders bevorzugt ist Vinylpropionat. Als weitere, weniger bevorzugte Vertreter der Komponente (a) sind nicht oder nur geringfügig wasserlösliche Derivate des (Meth)acrylamids, Vinylether und/oder Vinylaromaten, wie Styrol, anzuführen. Als wasserlösliche N-Vinylverbindung (b) sind z. B. N-Vinylpyrrolidon, N-Vinylpiperidon und N-Vinylimidazol bevorzugt.

Die Komponente (C) kann durch übliche Lösungspolymerisation, vorzugsweise in Lösungsmitteln, wie sie unter (B) genannt sind, gegebenenfalls auch im Gemisch mit Wasser, hergestellt werden.

Die K-Werte (nach Fikentscher) der Komponente (C) liegen im allgemeinen zwischen 20 und 50, vorzugsweise zwischen 25 und 40.

(D) Die Komponente (D) ist ein in der Lacktechnologie übliches anorganisches oder organisches Pigment, ein Füllstoff oder eine Mischung aus diesen, das in dem Gemisch aus den Komponenten (A), (B) und (C) feinteilig dispergiert und in Mengen von 10 bis 79 Gew.-%, vorzugsweise 15 bis 70 Gew.-%, in den erfindungsgemäßen Pigmentpasten enthalten ist.

Bevorzugte anorganische Pigmente bzw. Füllstoffe sind Titandioxid, Chromoxid, Chromate, Eisenoxide, Eisenkomplexe, Molbydatpigmente, Zinksulfid, Bariumsulfat, Kreide und Talkum; bevorzugte organische Pigmente sind Ruß, Phthalocyanin-, Perylen-, Chinacridon-, Flavanthron-, Anthrapyrimidin- und Pyranthronabkömmlinge. Selbstverständlich sind auch Gemische aus den genannten Pigmenten und Füllstoffen zur Einstellung bestimmter Farbtöne geeignet.

Die Summe der unter (A),' (B), (C) und (D) genannten Prozentzahlen ist gleich 100.

Die erfindungsgemäßen Pigmentpasten können außerdem andere in der Lacktechnologie übliche Hilfsstoffe, wie Verlaufsmittel, Netzmittel, Entschäumer, Neutralisationsmittel, Dispergierhilfsmittel, Thixotropiermittel und Antiabsetzmittel in untergeordneten Mengen enthalten.

Zur Herstellung der erfindungsgemäßen Pigmentpasten wird beispielsweise die Komponente (D), vorzugsweise in einer 1- bis 10gew.-%igen Lösung des Copolymeren (C) der Mischung der Komponenten (A) und (B) angeteigt, nach in der Lacktechnologie üblichen Methoden naß vermahlen und auf diese Weise in dem Gemisch aus (A), (B) und (C) fein dispergiert, wobei zum Anteigen zweckmäßigerweise ein Dissolver oder ähnliche Mischaggregate eingesetzt werden. Bevorzugte Dispergatoren sind Schüttelmaschinen, wie beispielsweise Red Devil der Fa. Erichsen, Rührwerksmühlen, Sandmühlen etc., wobei aus rheologischen Gründen geschlossene Mahlapparaturen bevorzugt sind. Gegebenenfalls mitzuverwendende andere in der Lacktechnologie übliche Hilfsstoffe können bereits vor der Dispergierung der Pigmente in die Mischung eingearbeitet werden.

Die nach dem Dispergieren in den erfindungsgemäßen Pigmentpasten enthaltenen Pigmente und/oder Füllstoffe (D) weisen im allgemeinen eine Korngröße nach DIN 53 203 unter 15 µm auf. Die Pasten können beispielsweise Feststoffgehalte von 15 bis 80 Gew.-%, vorzugsweise 20 bis 70 Gew.-% haben; sie sind nach 1 Woche Lagerung und darüber hinaus noch fließfähig und zeigen praktisch keine Sedimentationsneigung. Sie sind pumpbar und können somit auch in Ringleitungen problemlos gehandhabt werden.

Die erfindungsgemäßen Pigmentpasten sind univerversell verträglich und können deshalb mit wäßrigen Lösungen oder Dispersionen aus verschiedensten Lackbindemitteltypen, wie beispielsweise Acrylat-, gesättigten und ungesättigten Polyester-, Alkyd-, Epoxy-, Polyurethan- und Aminoplastharzen sowie allen denkbaren intra- und intermolekularen Kombinationen aus diesen aufgelackt werden.

Das Auflacken erfolgt mit einer der gewünschten Pigmentvolumenkonzentration entsprechenden Menge an Bindemittel bzw. Bindemittelgemisch. Dabei wird in der Regel das Bindemittel zur Paste gegeben, jedoch ist auch die umgekehrte Reihenfolge möglich. Das Auflacken geschieht vorzugsweise mit einem Schnellrührer, wobei Drehzahlen von 2000 U/min bei weitem ausreichen. Beim Auflacken können vorzugsweise auch gegebenenfalls mitzuverwendende übliche Lackhilfsmittel hinzugefügt werden. Die resultierenden Lacke können mit Wasser auf die gewünschte Verarbeitungsviskosität verdünnt werden und weisen übliche Stabilitäten auf.

Zur Einstellung bestimmter Farbtöne können die erfindungsgemäßen Pigmentpasten auch untereinander im jeweils erforderlichen Verhältnis gemischt und anschließend aufgelackt werden. Auch auf Basis verschiedener Copolymerer (C) hergestellte Pasten sind voll miteinander verträglich. Schließlich besteht auch die Möglichkeit, zum Abtönen eines fertigen Wasserlacks geringe Mengen einer erfindungsgemäßen Pigmentpaste in diesen nachträglich einzuarbeiten.

Die fertigen Lacke können auf die verschiedensten Substrate, wie beispielsweise Papier, Holz, Glas, Keramik, Leder, Kunststoffe und Metalle, aufgebracht werden. Das bevorzugte Substrat ist Metall. Die erfindungsgemäßen Pigmentpasten ermöglichen beispielsweise die Formulierung von wäßrigen Grundierungen, Füllern und Decklacken für die Automobillackierung. Durch Auflacken mit den entsprechenden Bindemitteln können schließlich auch Wasserlacke, die für Bandlackierung geeignet sind, erhalten werden.

Die Applikation der fertigen Lacke erfolgt nach üblichen Methoden, wie Streichen, Rakeln, Spritzen, Walzen, Gießen oder Drucken. Je nach Formulierung können die Überzüge durch physikalische und/oder oxidative Trocknung, in der Mehrzahl der Fälle aber bei höheren Temperaturen, wie sie in der Praxis üblich sind, gehärtet werden. Die erhaltenen Überzüge zeichnen sich durch gute klimatisch-technologische Eigenschaften aus, die denen direkter Anmahlungen äquivalent sind, d. h., die Lackeigenschaften bleiben durch das Pastenbindemittel (C) unbeeinflußt.

Die folgenden Beispiele sollen den Gegenstand vorliegender Erfindung näher erläutern ohne diesen einzuschränken. Wenn nicht anders angegeben, handelt es sich bei den aufgeführten Teilen und Prozentangaben um Gewichtsteile bzw. Gewichtsprozente.

Beispiel 1

a) Herstellung des Pastenbindemittels

In einem Reaktionsgefäß werden 200 Teile Ethylenglykolmonobutylester auf 90°C erwärmt. Dann wird binnen 2 Stunden eine Mischung aus 396 Teilen N-Vinylpyrrolidon, 204 Teilen Vinylpropionat und 1,2 Teilen Azobisisobutyronitril zugetropft. Abschließend wird 1 Stunde lang bei 90°C nachpolymerisiert. Das resultierende Lösungspolymerisat hat einen K-Wert nach Fikentscher von 24.

Der Festkörpergehalt der Copolymerisatlösung beträgt 76%.

b) Herstellung einer Weißpaste

In einer Mischung aus 53 Teilen des Copolymerisats nach Beispiel 1a), 168 Teilen Ethylenglykolmonobutylether und 180 Teilen Wasser werden 500 Teile Titandioxid angeteigt und mit 1000 Teilen Stahlkugeln 2 Stunden lang in einer Schüttelmaschine (z. B. Red Devil) dispergiert. Nach Abtrennen der Stahlkugeln wird eine Weißpaste erhalten, die wie folgt charakterisiert ist:

| | |
|---|---|
| Körnigkeit nach DIN 53 203: | < 7 µm |
| Festkörpergehalt: | 60% |
| Pigmentgehalt: | 55,5% |
| Bindemittelgehalt: | 4,5% |
| Lösungsmittelgehalt: | 20% |
| Wassergehalt: | 20% |

c) Herstellung einer Blaupaste

In einer Mischung aus 0,7 Teilen des Polymerisats nach Beispiel 1a), 4,6 Teilen Ethylenglykolmonobutylether und 4,8 Teilen Wasser werden 3,6 Teile Kupferphthalocyanin mit einem Schnellrührer angeteigt. Die Mischung wird anschließend zweimal durch eine kontinuierliche Rührwerksmühle geschickt (Durchsatz ca. 8 l/h). Als Mahlkörper werden Stahlkugeln verwendet. Die resultierende Blaupaste ist durch folgende Daten charakterisiert:

| | |
|---|---|
| Körnigkeit nach DIN 52 203: | < 15 µm |
| Festkörpergehalt: | 20,2% |
| Pigmentgehalt: | 26,3% |
| Bindemittelgehalt: | 3,9% |
| Lösungsmittelgehalt: | 35% |
| Wassergehalt: | 35% |

d) Herstellung einer Gelbpaste

In einer Mischung aus 45 Teilen des Polymerisats nach Beispiel 1a) 199 Teilen Ethylenglykolmonobutylether und 210 Teilen Wasser werden 146 Teile Eisenoxidgelb angeteigt und mit 500 Teilen Glasperlen ca. 1 Stunde lang in einer diskontinuierlichen Rührwerksmühle dispergiert. Nach Abtrennung der Glasperlen wird eine Gelbpaste erhalten, die wie folgt charakterisiert ist:

| | |
|---|---|
| Körnigkeit nach DIN 53 203: | < 10 µm |
| Festkörpergehalt: | 30% |
| Pigmentgehalt: | 24,3% |
| Bindemittelgehalt: | 5,7% |
| Lösungsmittelgehalt: | 35% |
| Wassergehalt: | 35% |

e) Herstellung einer Orangepaste

In einer Mischung aus 12,1 Teilen des Polymerisats nach Beispiel 1a), 55,4 Teilen Ethylenglykolmonobutylether und 116,7 Teilen Wasser werden 65,8 Teile eines handelsüblichen Orangepigments angeteigt und mit 200 g Glasperlen ca. 1 Stunde lang in einer diskontinuierlichen Rührwerksmühle dispergiert. Nach Abtrennen der Glasperlen wird eine Orangepaste erhalten, die wie folgt charakterisiert ist:

| | |
|---|---|
| Körnigkeit nach DIN 53 203: | < 10 µm |
| Festkörpergehalt: | 30% |
| Pigmentgehalt: | 26,3% |
| Bindemittelgehalt: | 3,7% |
| Lösungsmittelgehalt: | 23,3% |
| Wassergehalt: | 46,7% |

Beispiel 2

Farbtonpasten

a) Herstellung einer Blautonpaste

100 Teile Blaupaste nach Beispiel 1c) und 31,5 Teile Weißpaste nach Beispiel 1b) werden miteinander verrührt. Die resultierende Blautonpaste zeigt keine Kornvergröberung (Flockulation) und ist wie folgt charakterisiert:

| | |
|---|---|
| Festkörpergehalt: | 37,3% |
| Pigmentgehalt: | 33,3% |
| Bindemittelgehalt: | 4,0% |
| Lösungsmittelgehalt: | 31,4% |
| Wassergehalt: | 31,4% |

## b) Herstellung einer Orangetonpaste

45,6 Teile Orangepaste nach Beispiel 1e), 5,4 Teile Weißpaste nach Beispiel 1b) und 20,6 Teile Gelbpaste nach Beispiel 1d) werden miteinander verrührt. Die resultierende Orangepaste zeigt keine Kornvergrößerung (Flockulation) und ist wie folgt charakterisiert:

| | |
|---|---|
| Festkörpergehalt: | 32,3% |
| Pigmentgehalt: | 28,0% |
| Bindemittelgehalt: | 4,3% |
| Lösungsmittelgehalt: | 26,4% |
| Wassergehalt: | 41,3% |

### Beispiel 3

### Auflackung

Die im folgenden beschriebenen Auflackung können unter Berücksichtigung der jeweils gewünschten Pigmentvolumenkonzentrationen der jeweils gewünschten Pigmentvolumenkonzentrationen mit gutem Erfolg bei allen Pigmentpasten nach den Beispielen 1 und 2 durchgeführt werden. Hier werden jedoch nur einige Beispiele angeführt.

### a) Herstellung eines Weißlacks

200 Teile Weißpaste nach Beispiel 1) werden mit 414,5 Teilen einer Mischung aus 95 Teilen eines handelsüblichen Polyacrylatharzes mit einer Säurezahl von ca. 40 und einem K-Wert nach Fikentscher von ca. 25,6 Teilen Dimethylethanolamin, 28,5 Teilen eines handelsüblichen methanolveretherten Melaminformaldehydharzes und 285 Teilen Wasser mit einem Schnellrührer eine Minute bei 2000 U/min vermischt.

Der resultierende Lack ist wie folgt charakterisiert:

| | |
|---|---|
| Festgehalt: | 39,6% |
| Lösungsmittelgehalt: | 6,5% |
| Amingehalt: | 1,0% |

Er wird auf Bleche gerakelt und 30 Minuten bei 150°C eingebrannt. Man erhält hochglänzende Überzüge, deren Eigenschaften denen der direkt pigmentierten Klarlackmischung völlig entsprechen.

### b) Herstellung eines Blaulacks

200 Teile Blautonpaste nach Beispiel 2a) werden mit 946 Teilen einer Mischung aus 256 Teilen eines handelsüblichen gesättigten Polyesters mit einer Säurezahl von ca. 40 und einer OH-Zahl von ca. 90, 16 Teilen Dimethylethanolamin, 77 Teilen eines handelsüblichen methanolveretherten Melaminformaldehydharzes und 597 Teilen Wasser mit Hilfe eines Schnellrührers eine Minute bei 2000 U/min aufgelackt. Der resultierende Lack ist wie folgt charakterisiert:

| | |
|---|---|
| Festgehalt: | 35,6% |
| Lösungsmittelgehalt: | 5,5% |
| Amingehalt: | 1,4% |

Er wird, gegebenenfalls nach Verdünnung mit Wasser, auf Bleche appliziert und 30 Minuten bei 150°C eingebrannt. Die erhaltenen Überzüge sind hochglänzend und zeigen das gleiche Eigenschaftsbild wie eine entsprechende direkt pigmentierte Klarlackmischung.

### c) Herstellung eines Orangelacks

200 Teile Orangetonpaste nach Beispiel 2b) werden mit 703 Teilen einer Mischung aus 215 Teilen eines handelsüblichen kurzöligen Alkydharzes mit einer Säurezahl von ca. 45 und einer OH-Zahl von ca. 60, 15 Teilen Dimethylethanolamin, 65 Teilen eines handelsüblichen methanolveretherten Melaminformaldehydharzes und 408 Teilen Wasser mit Hilfe eines Schnellrührers 1 Minute bei 2000 U/min aufgelackt. Der resultierende Lack ist wie folgt charakterisiert:

| | |
|---|---|
| Festgehalt: | 38,2% |
| Lösungsmittelgehalt: | 5,8% |
| Amingehalt: | 1,7% |

Er wird, gegebenenfalls durch Verdünnung mit Wasser, auf Bleche appliziert und 30 Minuten bei 150°C eingebrannt. Die erhaltenen Überzüge sind hochglänzend und zeigen das gleiche Eigenschaftsbild wie eine entsprechende direkt pigmentierte Klarlackmischung.

## Patentansprüche

1. Pigmentpaste, dadurch gekennzeichnet, daß sie im wesentlichen besteht aus

(A) 1 bis 80 Gew.-% Wasser,
(B) 5 bis 84 Gew.-% mindestens eines in der Lacktechnologie üblichen organischen Lösungsmittels, ausgenommen rein aliphatische Kohlenwasserstoffe,
(C) 0,1 bis 20 Gew.-% eines Copolymeren aus
  (a) 10 bis 75 Gew.-% mindestens einer nicht oder nur teilweise mit Wasser mischbaren, copolymerisierbaren $\alpha,\beta$-olefinisch ungesättigten Verbindung und
  (b) 25 bis 90 Gew.-% mindestens einer wasserlöslichen copolymerisierbaren N-Vinylverbindung und
(D) 10 bis 79 Gew.-% mindestens eines in dem Gemisch aus (A), (B) und (C) dispergierten feinteiligen Pigments und/oder Füllstoffes,

mit der Maßgabe, daß die Summe der unter (A), (B), (C) und (D) genannten Prozentzahlen gleich 100 ist.

2. Pigmentpaste nach Anspruch 1, dadurch gekennzeichnet, daß das organische Lösungsmittel (B) ein C$_2$- bis C$_4$-Monoalkylether des Ethylenglykols und/oder dessen Monoacetats ist.

3. Pigmentpaste nach Anspruch 1, dadurch gekennzeichnet, daß als Komponente (a) im Copolymeren (C) ein Vinylester einer C$_2$- bis C$_{18}$-Monocarbonsäure und/oder ein (Meth)acrylsäureester eines C$_4$- bis C$_{18}$-Monoalkohols einpolymerisiert ist.

4. Pigmentpaste nach Anspruch 1, dadurch gekennzeichnet, daß als Komponente (b) im Copolymeren (C) N-Vinyl-pyrrolidon einpolymerisiert ist.

5. Verwendung der Pigmentpasten nach einem der Ansprüche 1 bis 4 zur Pigmentierung wäßrig gelöster bzw. dispergierter Lackbindemittel und Bindemittelmischungen.

6. Verwendung der Pigmentpasten nach einem der Ansprüche 1 bis 4 als Abtönpasten für bereits pigmentierte hochglänzende Wasserlakke.

## Claims

1. A pigment paste consisting essentially of

(A) from 1 to 80% by weight of water,
(B) from 5 to 84% by weight of one or more organic solvents conventionally employed in surface coatings, excluding purely aliphatic hydrocarbons,
(C) from 0,1 to 20% by weight of a copolymer of
    (a) from 10 to 75% by weight of one or more water-immiscible, or only partially water-miscible, copolymerizable $\alpha,\beta$-olefinically unsaturated compounds, and
    (b) from 25 to 90% by weight of one or more water-soluble copolymerizable N-vinyl compounds, and
(D) from 10 to 79% by weight of one or more finely divided pigments or fillers, or mixtures of pigments and fillers, dispersed in the mixture of (A), (B) and (C),

with the proviso that the sum of the percentages of (A), (B), (C) and (D) is 100.

2. A pigment paste as claimed in claim 1, wherein the organic solvent (B) is a C$_2$—C$_4$-monoalkyl ether of ethylene glycol, and/or the monoacetate thereof.

3. A pigment paste as claimed in claim 1, wherein component (a) present as copolymerized units in the copolymer (C) is a vinyl ester of a C$_2$—C$_{18}$-monocarboxylic acid and/or an acrylic acid ester or methacrylic acid ester of a C$_4$—C$_{18}$-monoalcohol.

4. A pigment paste as claimed in claim 1, wherein component (b) present as copolymerized units in the copolymer (C) is N-vinylpyrrolidone.

5. The use of a pigment paste as claimed in any of claims 1 to 4 for pigmenting an aqueous solution or dispersion of a surface-coating binder or binder mixture.

6. The use of a pigment paste as claimed in any of claims 1 to 4 for toning a pigmented water-based gloss finish.

## Revendications

1. Pigment en pâte, caractérisé par le fait qu'il est constitué essentiellement de

(A) 1 à 80% en poids d'eau;
(B) 5 à 84% en poids d'au moins un solvant organique usuel en technologie des vernis, à l'exclusion des hydrocarbures aliphatiques purs;
(C) 0,1 à 20% en poids d'un copolymère de
    a) 10 à 75% en pids d'au moins un composé à insaturation oléfinique en $\alpha,\beta$, copolymérisable, mélangeable avec l'eau; et
    b) 25 à 90% en poids d'au moins un composé N-vinylique copolymérisable, soluble dans l'eau; et
(D) 10 à 79% en poids d'au moins un pigment et/ou charge, dispersé dans le mélange de (A), (B) et (C),

sous réserve que la somme des pourcentages indiqués sous (A), (B), (C) et (D) soit égale à 100.

2. Pigment en pâte selon la revendication 1, caractérisé par le fait que le solvant organique (B) est un monoalkylether en C$_2$ à C$_4$ de l'éthyleneglycol et/ou son monoacétate.

3. Pigment en pâte selon la revendication 1, caractérisé par le fait que, comme composant (a) dans le copolymère (C), on fait entrer en polymérisation un ester vinylique d'un acide monocarboxylique en C$_2$ à C$_{18}$ et/ou un ester d'acide (meth)acrylique d'un monoalcool en C$_4$ à C$_{18}$.

4. Pigment en pâte selon la revendication 1, caractérisé par le fait que, comme composant (b) dans le copolymère (C), on fait entrer en polymérisation de la N-vinylpyrrolidone.

5. Utilisation des pigments en pâte selon l'une des revendications 1 à 4 pour la pigmentation de liants et mélanges de liants pour vernis, aqueux, dissous ou dispersés.

6. Utilisation des pigments en pâte selon l'une des revendications 1 à 4, commes pâtes à nuancer pour vernis à l'eau, à haut brillant et déjà pigmentés.